# EUROPEAN PATENT APPLICATION

(11) **EP 3 338 935 A1**
(43) Date of publication of application: **27.06.2018**
(21) Application number: 16206209.5
(22) Date of filing: 22.12.2016
(51) Int. Cl.: B23K 9/04, B23K 9/167, B23K 9/29, B23K 35/02

(54) **3D PRINTING APPARATUS**

(71) Applicant: MAN Truck & Bus AG, 80995 München (DE)
(72) Inventor: PUCEK, Dawid, 27-200 Starachowice (PL)
(74) Representative: v. Bezold & Partner Patentanwälte - PartG mbB

(57) **Abstract**

The present invention relates to an apparatus for making three-dimensional physical objects of a predetermined shape by sequentially depositing multiple layers of solidifying material on a base member in a desired pattern (3d printing apparatus), and more particularly to an arc welding based three-dimensional printing apparatus comprising a printing header for dispensing said materials to build said three-dimensional physical object. The apparatus comprises a printing header comprising a least one arc welding torch (1), said arc welding torch (1) comprising an axially extending first nozzle (4) and an axially extending non-consumable electrode (3), said electrode being disposed substantially coaxially within the first nozzle (4) and having a tip (3a) disposed at a distal end (4a) thereof and/or outside said first nozzle (4), means for supplying electricity to said electrode and means for supplying a protecting gas (11) to said first nozzle (4) for shielding said electrode (3) from oxidising conditions, wherein said arc welding torch (1) further comprises an axially extending through-hole (7) formed through said electrode (3), and an elongated non-electrified guide portion (8b) disposed within said through-hole (1) terminating inwardly of said tip (3a); and a consumable material wire (9) that is fed through said guide portion (8) relatively to said electrode (3) so that said material wire is not electrified by said guide portion (8b) or by said electrode (3).

## Description

### Field of the invention

The present invention relates to an apparatus for making three-dimensional physical objects of a predetermined shape by sequentially depositing multiple layers of solidifying material on a base member in a desired pattern (3D printing apparatus), and more particularly to a arc welding (GMAW)-based three-dimensional printing apparatus.

### Background of the invention

In the present specification, reference is made to the following prior art illustrating the technical background:
[1] Horrii, T. Kirihara, S., "Freefrom fabrication method of alloys and intermetallic compounds by 3D Micro Welding", Transactions of JWRI, Vol. 37 (2008), No. 2; and
[2] CN 204470602 U

Three-dimensional (3D) printing refers to additive manufacturing processes that create 3D objects based on digital 3D object models and a materials dispenser. In 3D printing, a dispenser moves in at least 2-dimensions and dispenses material in accordance to a determined print pattern. To build a 3D object, a platform that holds the object being printed is adjusted such that the dispenser is able to apply many layers of material. In other words, a 3D object may be printed by printing many layers of material, one layer at a time. If the dispenser moves in 3-dimensions, movement of the platform is not needed. 3D printing features such as speed, accuracy, colour options and cost vary for different dispensing mechanisms and materials.

There are various freeform fabrication methods such as stereo-lithography, fused deposition modelling, selective laser sintering and 3D printing, Among printing processes for the production of three-dimensional objects, the process that is most economical in use of materials and that is also most advantageous in terms of design of machinery is the fused-deposition-modelling (FDM) process. This involves an extrusion-based, digital manufacturing system. There are also other known processes that are substantially analogous with slight differences, for example fused filament fabrication (FFM), melted extrusion manufacturing (MEM) or selective deposition modelling (SDM).

Many objects formed with these methods cannot achieve mechanical properties required in actual products, especially for metal products. Additionally, the methods of rapid prototyping for metals are few and the metallic materials for fabrications are limited

A newer approach for 3d printing of metal objects is described in [1] and referred to as 3D micro welding (3DMW). The reference [1] discloses a gas metal arc welding (GMAW)-based three-dimensional printing apparatus consisting of four sections: a printing header, an arc control unit, system control computers, and a video monitoring device. There are an X-Y-Z stage, a welding torch and two wire feeders in the printing header. The arc control unit contains a micro TIG welder. All these components are controlled by the computer system.

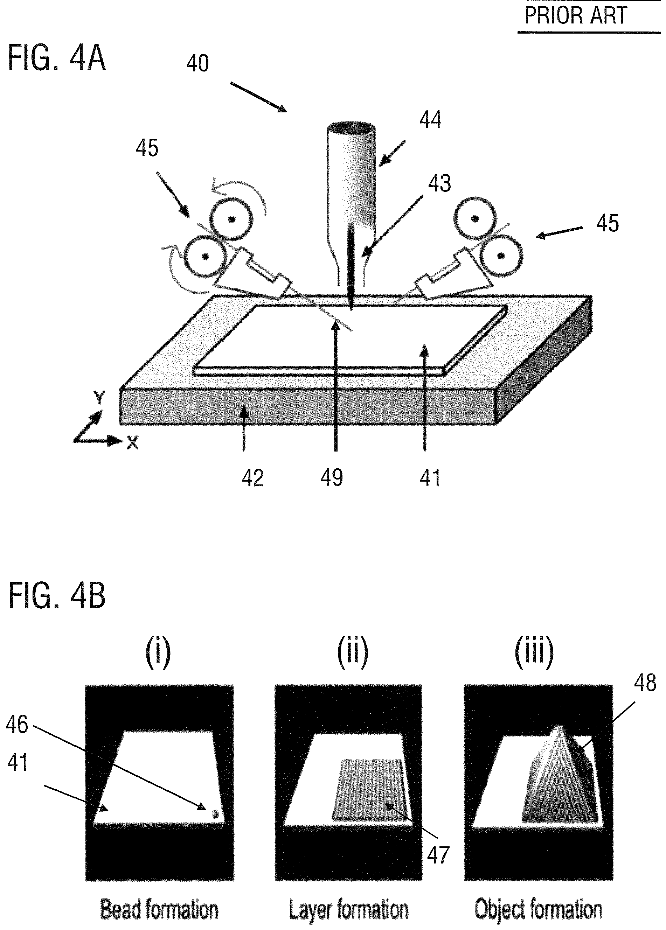

The schematic illustration of the printing header 40 and process as disclosed in reference [1] are shown in figure 4A. A metal substrate 41 is placed on the x-y stage 42 under a tungsten electrode 43 of an arc welding torch 44 for arc welding. As shown in figure 4B, a small metal bead 46 of ∼ 1 mm in diameter is formed by a micro arc applied to the tip of a thin metal wire 49 of 200 µm in diameter. The metal wire 49 is provided by a wire feeder 44. Here, two different wire feeders 45 are used. A fused bead 46 is welded to the metal substrate 41 or to previously formed beads. By continuing this process and building up beads layer by layer 47 under the control of computer system, a 3D metal object 48 can be produced. A 3D model is designed by 3D computer aided design (CAD) software and it is sliced into a set of thin layers by commercial software.

Reference [2] also discloses a gas metal arc welding (GMAW)-based three-dimensional printing apparatus using a tungsten needle electrode.

One of the difficulties with the prior art GMAW-based 3D printing apparatuses as shown in references [1] and [2] is that the metal wire is fed through a wire feeder that is external of the arc welding torch. In order words, conventionally, the metal wire is fed to the welding zone adjacent to the tip of the electrode through a guide in the form of a conduit, which is generally outside the electrode and nozzle of the arc welding torch. Such external wire feeders may get in the way when welding certain workpieces and also may expose portions of the wire to the environment outside the shielding gas thereby resulting in oxidation of the wire and thus a poor weld. In addition, clearance problems may occur when printing workpieces having finely structured or complex part geometries.

### Objective of the invention

The apparatus for making three-dimensional physical objects of the present invention has been developed to overcome the above-mentioned known problems associated with the known apparatuses for making three-dimensional physical objects. Thus, it is an object of the invention to provide an improved apparatus for making three-dimensional physical objects, in particular metal objects or objects comprising metallic materials.

### Summary of the invention

The above objectives are solved by a three-dimensional printing apparatus (3D printing apparatus) for making three-dimensional physical objects comprising the features of the independent claims, resp. Advantageous embodiments and applications of the invention are defined in the dependent claims.

According to a first general aspect of the invention, the above objective is solved by an arc welding based apparatus (also referred to as gas arc welding based apparatus) for making three-dimensional physical objects of a predetermined shape by sequentially depositing multiple layers of solidifying material on a base member in a desired pattern. The apparatus is thus a so-called Wire + Arc Additive Manufacturing device (WAAM device). Preferably, the arc welding based apparatus is a gas metal arc welding (GMAW)-based apparatus.

The 3D printing apparatus comprises a printing header (also referred to as dispensing head) for dispensing said solidifying material to build said three-dimensional physical object.

The printing header may extrude a fluid material. The fluid material may be a metal heated by a welding system such as a TIG welder. According to this aspect, the printing header comprises a least one arc welding torch, e.g. for gas tungsten arc welding, said arc welding torch comprising an axially extending first nozzle and an axially extending non-consumable electrode. Therefore, the electrode does not melt during the 3D printing process. The electrode is disposed substantially coaxially within the first nozzle and has a tip disposed at a distal end thereof and/or outside said first nozzle.

The arc welding torch further comprises means for supplying electricity to said electrode and means for supplying a protecting gas, e.g. an inert gas, to said first nozzle for shielding said electrode from oxidising conditions.

The arc welding torch further comprises an axially extending through-hole formed through said electrode and/or through an electrode housing, and an elongated non-electrified guide portion disposed within said through-hole terminating inwardly of said tip. The through-hole may be a bore so that the electrode is hollow. A consumable material wire is provided, that is fed through said guide portion relatively to said electrode so that said material wire is not electrified by said wire guide and/or by said electrode.

Therefore, an arc welding based 3D printing device is provided for making three-dimensional physical objects of a predetermined shape having a guide for the consumable material wire, which is internal of the electrode and/ or an electrode housing.

It is therefore a particular advantage of the present invention that the problems of the prior art devices where the material wire is fed through a wire feeder that is entirely external of the arc welding torch can be avoided. By providing the consumable material wire inside the electrode or electrode housing, i.e. surrounded by the unmelting electrode, more finely structured or complex part geometries can be printed and the consumable wire can be better shielded by the protecting gas. Another advantage is that the welding torch can be made to travel in any direction without need to rotate the torch so that the 3D object can be printed much faster. Furthermore, the consumable material wire is pre-heated by the electrode and thus more wire can be fed to the pool of molten material.

According to a preferred aspect of the invention, the consumable material wire is a metal wire. According to this aspect, the arc welding based three-dimensional printing apparatus is a gas metal arc welding (GMAW) based three-dimensional printing apparatus. However, it is noted that metal as the material for the consumable material wire is only one preferred example of carrying out the invention, and the invention is not limited to this type of material. The material of the consumable material wire may also be or comprise a filament non-metal material or composite material. The term "wire" as used herein therefore is not limited to a metal wire but refers also to other types of filament materials. By way of example, the consumable material wire may be a filament material comprising conductive powder(s), e.g. micron conductive powders, conductive fiber(s), or a combination of conductive powder and conductive fibers. By way of example, the consumable material wire may be a filament material having a metal surface or coating. The material of the consumable material wire may be or comprise one of plastic, ceramic, or composite materials. The material of the consumable material wire may be one of plastic, ceramic or composite materials having a metal surface.

According to a preferred aspect of the invention, the non-consumable electrode is an arc needle electrode and/or a tungsten electrode.

According to another aspect of the invention, the arc welding torch may comprise an axially extending element arranged between the guide portion and said first nozzle and may connect the arc welding torch with the printing header, which allows for a compact yet stable design.

According to yet another aspect of the invention, said means for supplying a protecting gas to said first nozzle may comprise an axially extending annular second nozzle. According to this aspect, the second nozzle comprises a set of circumferential nozzle outlet openings, wherein protecting gas exiting from said second nozzle through said nozzle outlet openings is guided in an axial direction by an inner wall of the first nozzle towards the distal end of the first nozzle. The second nozzle may be arranged within said axially extending element. A portion of the consumable wire may be fed through the second nozzle. Thus, a portion of the consumable material wire may be guided inside the second nozzle or, in other words, the second nozzle may surround a portion of the material wire. An advantage resulting from this embodiment is that the consumable wire is better shielded by the protecting gas and becomes less exposed to air.

According to another aspect of the invention, the guide may comprise a conduit of electrically insulated material, through which the material wire is fed relatively to said electrode and wherein said conduit is coaxially disposed within said electrode, and said wire is fed coaxially relatively to said electrode. By way of example, said conduit may comprise ceramic.

According to another aspect of the invention, the 3D printing apparatus may comprise more than one arc welding torch. By way of example, the 3D printing apparatus may comprise two arc welding torches. According to this embodiment, the consumable material wire that is fed through said guide portion of the first arc welding torch may be a metal, e.g. aluminium, and the filament material (second material) that is fed through said guide portion of the second arc welding torch is a material different from the material fed through said first guide portion of the first arc welding torch. The second material may be one of steel, plastic and rubbery. According to another aspect of the invention, the 3D printing apparatus may further comprise a base member disposed in close, working proximity to said printing header, and mechanical means for moving said printing header and said base member relative to each other in three dimensions along "X," "Y," and "Z" axes in a rectangular coordinate system in a predetermined sequence and pattern and for displacing said printing header a predetermined incremental distance relative to the base member and relative to each successive layer deposited prior to the commencement of the formation of each successive layer to form multiple layers of said solidifying material, which build up on each other sequentially as they solidify after discharge from said printing header.

### Brief description of the drawings

Further details and advantages of the invention are described in the following with reference to the attached drawings, which show in:
- figure 1: a schematic illustration of an embodiment of an arc welding torch of a printing header of a 3D printing apparatus;

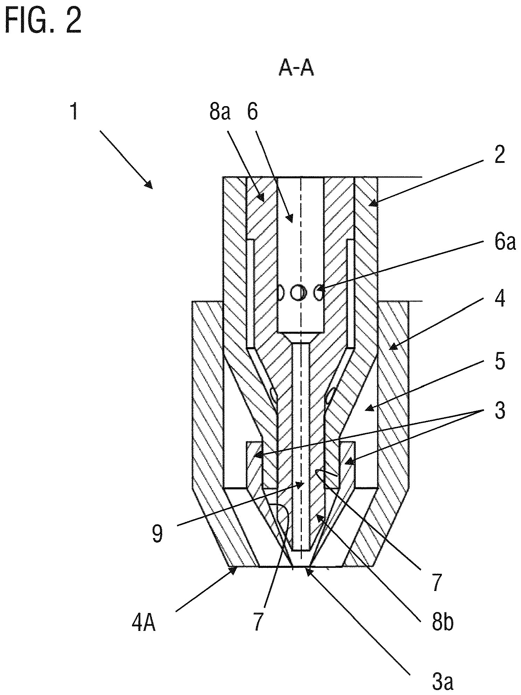

- figure 2: a sectional view of the arc welding torch shown in figure 1;
- figure 3: a sectional view of the tip of the arc welding torch during a printing process;
- figure 4A: a schematic perspective view of a gas metal arc welding (GMAW)-based 3D printing apparatus known from the prior art; and
- figure 4B: a schematic illustration of the 3D printing process using a GMAW-based 3D printing apparatus.

### Description of the preferred embodiments

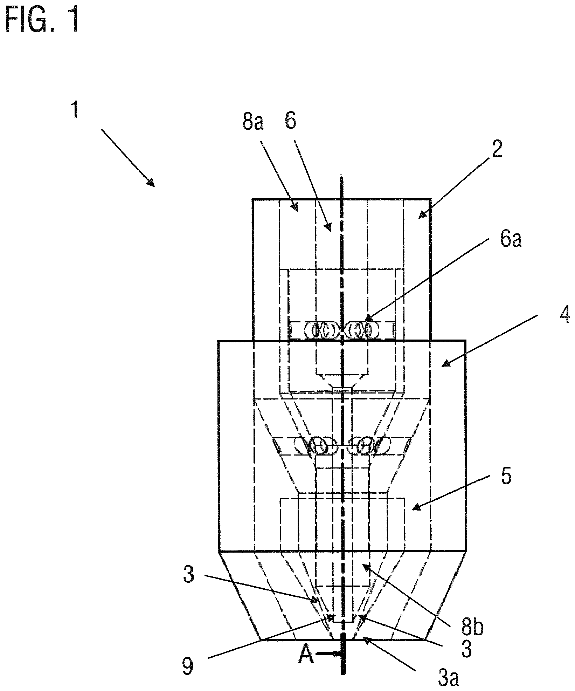

Figure 1 shows a schematic illustration of an embodiment of an arc welding torch 1 of a gas metal arc welding (GMAW)-based three-dimensional printing apparatus.

The rest of the printing header and the other components of the GMAW-based 3D printing apparatus are not shown. These components are known from the prior art and therefore not described in detail here. By way of example, reference is made to references [1] and [2], that describe such components which could be used in combination with the arc welding torch of the invention. By way of example, the 3D printing apparatus of the invention may further comprise a base member 42 as shown in figure 4A disposed in close, working proximity to said printing header and arc welding torch. The 3D printing apparatus of the invention may further comprise mechanical means as described in reference [1] for moving said printing header and said base member relative to each other in three dimensions along "X," "Y," and "Z" axes in a rectangular coordinate system in a predetermined sequence and pattern and for displacing said printing header a predetermined incremental distance relative to the base member and relative to each successive layer deposited prior to the commencement of the formation of each successive layer to form multiple layers of said solidifying material, which build up on each other sequentially as they solidify after discharge from said printing header.

The arc welding torch 1 shown in figure 1 is integrated in a printing header of an apparatus for making three-dimensional physical objects 48 of a predetermined shape as illustrated in figure 4B by sequentially depositing multiple layers 47 of solidifying material on a base member 46 in a desired pattern. The apparatus is a GMAW-based 3D printing apparatus.

The arc welding torch 1 for gas tungsten arc welding comprises an axially extending annular first nozzle 4, through which an inert shielding gas 11 such as argon or helium or mixtures thereof is fed from a supply means extending through the housing of the printing header. The nozzle 4 is disposed around a tungsten electrode 3 supplied from an electrical power source through an electrical conductor also extending through the housing of the printing header (also not shown).

The electrode 3 is disposed substantially coaxially within the first nozzle 4 and has a tip 3a disposed at a distal end 4a thereof. The electrode 3 may be pure tungsten or tungsten alloy rod. Thus, although the term tungsten is used herein, it should be understood that this term is not intended to be limited to pure tungsten, but includes all the known tungsten alloys conventionally used for GTAW electrodes.

The arc welding torch 1 further comprises an axially extending through-hole 7 formed through said electrode 3 so that the electrode 3 is hollow. The through-hole 7 may be a bore. Furthermore, an elongated non-electrified hollow guide portion disposed within said through-hole 7 is provided. The guide portion has a lower guide portion 8b disposed within said through-hole 7 terminating inwardly of said tip 3a and an upper guide portion 8a.

The arc welding torch 1 comprises an axially extending element 2 arranged between the guide portion 8 and said first nozzle 4 for connecting the arc welding torch 1 with another portion of the printing header.

A consumable metal wire 9 is fed through the guide portion 8 relatively to said electrode 3 so that said metal wire is not electrified by said metal wire guide 8b or by said electrode 3. The metal wire can be provided by a wire feed located outside of the arc welding torch 1.

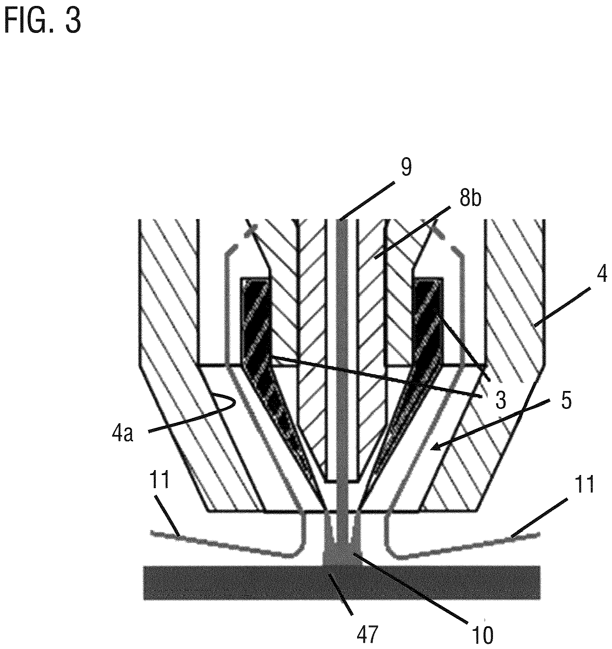

Furthermore, the arc welding torch 1 comprises means for supplying a protecting gas 11 to said first nozzle 4 for shielding said electrode 3 from oxidising conditions. Said means for supplying the protecting gas 11 to said first nozzle 4 comprises an axially extending annular second nozzle 6 surrounding a portion of the metal wire upstream of the tip 3a of the electrode 3. The second nozzle 6 comprises a set of circumferential nozzle outlet openings 6a, wherein protecting gas 11 exiting from said second nozzle 6 through said nozzle outlet openings 6a is guided in an substantial axial direction by an inner wall of the first nozzle 4 through a passage 5 between the first nozzle 4 and the electrode 3 towards the distal end 4a of the first nozzle 4. This is illustrated in figure 3.

Since the wire 9 is pre-heated by the electrode 3, more wire may be fed to the weld puddle 10. Additionally, since the lower guide portion 8b is disposed within the electrode 3, which is within the first nozzle 4, the wire 9 is always within the envelope of the shielding gas 11 so that problems resulting from oxidising of the wire are eliminated (see also figure 3).

As described above, the proposed 3D printing apparatus combines micro tungsten inert gas (TIG) welding with a layered manufacturing technique. A thin metal wire 9 is melted by the arc of the arc welding torch 1 and a metal bead 46 is formed. Due to the complete melting of the supplied metal wire 9, the produced parts have practical strength and the formed structures are fully dense. Additionally, it is possible to fabricate intermetallic objects by mixing two metal wires of different metal type on the forming stage and the distribution of composition can be controlled. For example, 3D objects of an aluminium-steel intermetallic alloy can be printed. Additionally, it is possible to join a metal material with a non-mental material with this approach, e.g. aluminium-plastic, aluminium-rubbery etc.

### Reference numeral list

- 1: Arc welding torch
- 2: Element connecting arc welding torch with printing header
- 3: Electrode
- 3a: Tip of electrode
- 4: First nozzle
- 4a: Distal end of first nozzle
- 5: Passage
- 6: Second nozzle
- 6a: Nozzle outlet openings
- 7: Through-hole
- 8a: Upper guide portion
- 8b: Lower guide portion
- 9: Consumable wire
- 10: Weld puddle
- 11: Protecting gas
- 40: Printing header
- 41: Metal substrate
- 42: x-y stage
- 43: Tungsten electrode
- 44: Arc welding torch
- 45: Wire feeders
- 46: Metal bead
- 47: Layer
- 48: Printed 3D object
- 49: Consumable wire

## Claims

1. Apparatus for making three-dimensional physical objects of a predetermined shape by sequentially depositing multiple layers of solidifying material on a base member in a desired pattern, wherein the apparatus is an arc welding based three-dimensional printing apparatus, comprising a printing header for dispensing said materials to build said three-dimensional physical object, the printing header comprising
a least one arc welding torch (1), said arc welding torch (1) comprising an axially extending first nozzle (4) and an axially extending non-consumable electrode (3), said electrode being disposed substantially coaxially within the first nozzle (4) and having a tip (3a) disposed at a distal end (4a) thereof and/or outside said first nozzle (4), means for supplying electricity to said electrode and means for supplying a protecting gas (11) to said first nozzle (4) for shielding said electrode (3) from oxidising conditions, wherein said arc welding torch (1) further comprises an axially extending through-hole (7) formed through said electrode (3), and an elongated non-electrified guide portion (8b) disposed within said through-hole (1) terminating inwardly of said tip (3a); and
a consumable material wire (9) that is fed through said guide portion (8) relatively to said electrode (3) so that said material wire is not electrified by said guide portion (8b) and/or by said electrode (3).

2. The apparatus according to claim 1, wherein the arc welding based three-dimensional printing apparatus is a gas metal arc welding (GMAW) based three-dimensional printing apparatus and/or wherein the consumable material wire is a metal wire.

3. The apparatus according to claim 1, wherein the consumable material wire is a filament material comprising conductive powder(s), conductive fiber(s), or a combination of conductive powder and conductive fibers.

4. The apparatus according to claim 1, wherein the consumable material wire comprises a filament non-metal material, preferably a non-metal material having a metal surface.

5. The apparatus according to one of the preceding claims, wherein the non-consumable electrode (3) is an arc needle electrode and/or a tungsten electrode.

6. The apparatus according to one of the preceding claims, wherein said arc welding torch (1) comprises an axially extending element (2) arranged between the guide portion (8) and said first nozzle (4), that connects the arc welding torch (1) with the printing header.

7. The apparatus according to one of the preceding claims, wherein said means for supplying a protecting gas (11) to said first nozzle (4) comprises an axially extending annular second nozzle (6) surrounding a portion of the material wire (9), wherein said second nozzle (6) comprises a set of circumferential nozzle outlet openings (6a), wherein protecting gas (11) exiting from said second nozzle (6) through said nozzle outlet openings (6a) is guided by an inner wall of the first nozzle (4) towards the distal end (4a) of the first nozzle (4).

8. The apparatus according to one of the preceding claims, wherein said guide portion comprises a conduit of electrically insulated material through which the material wire (9) is fed relatively to said electrode (3), wherein said conduit is coaxially disposed within said electrode, and said material wire (9) is fed coaxially relatively to said electrode.

9. The apparatus according to claim 8, wherein said conduit comprises ceramic.

10. The apparatus according to one of the preceding claims, comprising two arc welding torches (1), wherein the consumable material wire (9) that is fed through said guide portion (8) of the first arc welding torch is aluminium and wherein the consumable material wire that is fed through said guide portion of the second arc welding torch is one of steel, plastic and rubbery.

11. The apparatus according to one of the preceding claims, further comprises a base member disposed in close, working proximity to said printing header, and mechanical means for moving said printing header and said base member relative to each other in three dimensions along "X," "Y," and "Z" axes in a rectangular coordinate system in a predetermined sequence and pattern and for displacing said printing header a predetermined incremental distance relative to the base member and relative to each successive layer deposited prior to the commencement of the formation of each successive layer to form multiple layers of said solidifying material, which build up on each other sequentially as they solidify after discharge from said printing header.
